# EUROPEAN PATENT APPLICATION

(11) **EP 4 462 942 A1**
(43) Date of publication of application: **13.11.2024**
(21) Application number: 24175542.0
(22) Date of filing: 13.05.2024
(51) Int. Cl.: H04W 76/19, H04W 24/04, H04W 36/00, H04W 36/30, H04W 48/08

(54) **SYSTEM AND METHOD FOR SIB1 OPTIMIZATION DURING NSA AND SA TO NSA CHANGE FOR IMPROVED CELL PERFORMANCE**

(30) Priority: 11.05.2023 IN 202321033146; 10.05.2024 US 202418660331
(71) Applicant: Mavenir Systems, Inc., Richardson, TX 75081 (US)
(72) Inventor: S., Srinivasan, 560037 Bangalore (IN); KAUL, Suveer, 560064 Bangalore (IN)
(74) Representative: dompatent von Kreisler Selting Werner - Partnerschaft von Patent- und Rechtsanwälten mbB

(57) **Abstract**

Described are implementations of base station Control Plane (CU-CP) of a gNB-CU or an eNB-CU-CP configured to request a Distributed Unit (DU) to remove a System Information Block 1 (SIB1) or broadcast a minimal SIB1 for a network gateway - and Automatic Neighbor Relation (ANR) or a 4G Mobility Management Entity/Serving Gateway (MME/S-GW). At a disconnection of the network gateway, the CU Control Plane of the base station sends a request to the DU of the base station to remove the SIB1, or to broadcast a minimal transmission of the SIB1.

## Description

### DESCRIPTION OF RELATED ART

### a. Field of the Disclosure

The present disclosure relates to systems and methods for radio access networks. The present disclosure further relates to designs of the operation, administration and management of various network elements of 4G and 5G based mobile networks.

### SUMMARY OF THE DISCLOSURE

The disclosure describes various implementations of a system, method, and computer program product including program memory that includes instructions which, when executed by a processor, executes the method described above and herein.

In an implementation, there is a method for a radio access network (RAN) base station (BS) comprising:
establishing an SI connection between a base station and a network gateway, the network gateway being for a 4G Evolved Packet Core (EPC) network or a 5G New Radio (NR) network;
establishing an F1 setup including an SIB1 between a CU and a DU of the base station;
establishing an X2 setup between a Master Node and the base station, the base station being configured to handle both a Stand Alone (SA) and a Non-Stand Alone (NSA) users; and
at a disconnection of the network gateway, sending, by a CU-CP of the base station, a request to the DU of the base station to
remove the SIB1, or
to broadcast a minimal transmission of the SIB1.

The base station can be a gNB and the network gateway can be an Access and Mobility Function (AMF) for the 5G NR network, with the method comprising:
establishing an NG setup between the gNB and the AMF;
establishing the F1 setup between a gNB-CU and a gNB-DU including the SIB1;
establishing an E-UTRA-NR Dual Connectivity (EN-DC) X2 setup between a Master eNB (MeNB] and the gNB; and
   at a disconnection of the AMF, sending, by a gNB-CU-Control Plane (gNB CU-CP) of the gNB, the request to the gNB-DU to remove the SIB1 or the request to broadcast the minimal transmission of the SIB1 for an Automatic Neighbor Relation (ANR). The method can further comprise: when a Stream Control Transmission Protocol (SCTP) connection between the AMF and gNB CU-CP is down, releasing, by the gNB, all SA User Equipment (UEs), where the gNB operates in an NSA only mode and handles only NSA users; and removing the SIB1 or transmitting minimal SIB1 for NSA operation in response to the request remove the SIB1 or broadcast the minimal transmission of the SIB1 for the ANR. The method can further comprise once the AMF SCTP connection is back up, broadcasting, by the gNB DU, a complete SIB1. The method can further comprise requesting, by the gNB-CU-CP, the gNB DU to transmit the complete SIB1 by sending the gNB-CU Configuration Update with a complete SIB1 value. The method can further comprise acknowledging, by the gNB-DU, a gNB-CU Configuration Update, whereby the gNB can resume handling both SA and NSA users.

The method can further comprise sending, by the gNB CU-CP, a gNB-CU Configuration Update including an ANR SIB1 value (AnrSIB1) for the minimal transmission of the SIB1 that can be broadcasted for ANR or a No SIB1 value (noSIB) that the DU does not transmit the SIB1. The method can further comprise deciding, by the gNB CU-CP between the ANR SIB1 value and the No SIB1 value based on whether the gNB-CU Configuration Update is for the ANR in NSA mode, where if the ANR is needed in an NSA mode, the gNB CU-CP is configured to use the ANR SIB1 value, and if not, the ANR is configured to use the No SIB1 value. The method can further comprise acknowledging, by the gNB-DU, the gNB-CU Configuration Update.

The method can further comprise stopping the SIB1 broadcast for the ANR as requested by the CU-CP.

In an implementation, where the base station is an eNB and the network gateway is an MME/S-GW for the 4G EPC network, the method comprises: establishing an NG setup between the eNB and the MME/S-GW; establishing the F1 setup between an eNB CU and an eNB-DU including the SIB1; establishing the EN-DC Xn setup between the MeNB and the gNB; and at a disconnection of the MME/S-GW, sending, by an eNB-CU-CP of the eNB, the request to the eNB-DU to remove the SIB1 or the request to broadcast the minimal transmission of the SIB1 for the MME/S-GW.

In an implementation, where the base station is a gNB and the network gateway is an Access and Mobility Function (AMF) for the 5G NR network, the method comprises:
configuring a gNB operating mode to operate as SA+NSA, SAonly, or NSAonly in a gNB-CU-CP, so that when the operating mode is SAonly or SA+NSA, the gNB-CU-CP is configured to inform the DU to broadcast a complete SIB1;
when the operating mode is NSAonly, gNB-CU-CP is configured to inform the DU to broadcast the minimal SIB1 (AnrSIB1) or no SIB1 (NoSIB1); and
when the operating mode of the cell is changed from SAonly or SA+NSA to NSAonly, the gNB-CU-CP configured to inform DU to broadcast the minimal SIB1 (AnrSIB1) or no SIB1 (NoSIB1).

In an implementation, where the base station is an eNB and the network gateway is an MME/S-GW for the 4G EPC network, the method comprises:
configuring a eNB operating mode to operate as SA+NSA, SAonly, or NSAonly in a eNB-CU-CP, so that when the operating mode is SAonly or SA+NSA, the eNB-CU-CP is configured to inform the DU to broadcast a complete SIB1;
when the operating mode is NSAonly, eNB-CU-CP is configured to inform the DU to broadcast the minimal SIB1 (AnrSIB1) or no SIB1 (NoSIB1); and
when the operating mode of the cell is changed from SAonly or SA+NSA to NSAonly, the eNB-CU-CP configured to inform DU to broadcast the minimal SIB1 (AnrSIB1) or no SIB1 (NoSIB1)

### BRIEF DESCRIPTION OF THE FIGURES

FIG. 1 illustrates an E-UTRAN network architecture.
FIG. 2 Illustrates an E-UTRA-NR Dual Connectivity network architecture.
FIG. 3 illustrates an NG-RAN architecture.
FIG. 4A shows a NSA Architecture.
FIG. 4B shows a NSA Architecture
FIG. 5 is a block diagram of a RAN system.
FIG. 6 shows an illustration of an SA NSA sequence.
FIG. 7 shows an illustration of an SA NSA sequence.

### DETAILED DESCRIPTION

The present disclosure describes implementations for various wireless communication networks such as CDMA, TDMA, FDMA, OFDMA, SC-FDMA and other networks. A CDMA network can implement a radio technology such as universal terrestrial radio access (UTRA), cdma2000, and the like. UTRA includes wideband CDMA (WCDMA), time division synchronous CDMA (TD-SCDMA), and other variants of CDMA. A TDMA network can implement a radio technology such as global system for mobile communications (GSM). An OFDMA network can implement a radio technology such as evolved UTRA (E-UTRA), ultra mobile broadband (UMB), IEEE 802.11 (Wi-Fi), IEEE 802.16 (WiMAX), IEEE 802.20, Flash-OFDMO, etc. UTRA and E-UTRA are part of universal mobile telecommunication system (UMTS). UTRA, E-UTRA, UMTS, LTE, LTE-A and GSM are described in documents from an organization named "3rd Generation Partnership Project" (3GPP). NR (e.g., 5G radio access) includes an evolving set of enhancements to the 3GPP 3G LTE mobile standard. Implementations as described herein can be employed for radio technologies and wireless networks as described above and herein as well as other wireless networks and radio technologies.

Reference is made to Third Generation Partnership Project (3GPP) and the Internet Engineering Task Force (IETF) in accordance with implementations of the present disclosure. The present disclosure employs abbreviations, terms and technology defined in accord with Third Generation Partnership Project (3GPP) and/or Internet Engineering Task Force (IETF) technology standards and papers, including the following standards and definitions. 3GPP and IETF technical specifications (TS), standards (including proposed standards), technical reports (TR) and other papers are incorporated by reference in their entirety hereby, define the related terms and architecture reference models that follow.
3GPP TS 36.423 17.4.0 (2022-04-03)
3GPP TS 37.340 v 17.4.0 (2023-03-31)
3GPP TS 37.473 v 17.2.0 (2023-04-03)
3GPP TS 38.300 v 17.4.0 (2023-03-28)
3GPP TS 38.331 v 17.4.0 (2023-03-30)
3GPP TS 38.473 v 17.4.0 (2023-04-05)

### Abbreviations:

- 3GPP: 3rd Generation Partnership Project
- AMF: Access and Mobility Function
- ANR: Automatic Neighbor Relation
- BS: Base Station
- CU: Centralized Unit
- CU-CP: Centralized Unit Control Plane
- CU-UP: Centralized Unit User Plane
- DL: Downlink
- DU: Distributed Unit
- E-UTRAN: Evolved UTRAN
- EN-DC: E-UTRA-NR Dual Connectivity
- eNB: E-UTRAN NodeB
- EPC: Evolved Packet Core
- gNB: gNodeB
- GUAMI: Globally Unique AMF Identifier
- LTE:: Long Term Evolution, aka 4G
- MME: Mobility Management Entity
- NB-IoT: Narrow-Band IoT
- NG: Next Generation
- NR: New Radio
- NSA: Non-Standalone Architecture
- MN: Master Node
- ACK: Acknowledgement
- RRC: Remote Radio Control
- RAT: Radio Access Technology
- SA: Stand Alone
- SCTP: Stream Control Transmission Protocol
- SDAP: Service Data Adaptation Protocol
- S-GW:: Serving Gateway
- SIB1: System Information Block 1
- SN: Secondary Node
- UE: User Equipment
- UL: Uplink
- U-plane:: User plane
- UPF: User Plane Function
- UMTS: Universal Mobile Telecommunications System
- UTRAN: UMTS Terrestrial Radio Access Network

### Definitions

**Dual Connectivity:** a mode of operation of a UE in RRC_CONNECTED, configured with a Master Cell Group and a Secondary Cell Group.
**En-gNB:** a node providing NR user plane and control plane protocol terminations towards the UE, and acting as Secondary Node in EN-DC.
**gNB:** a node providing NR user plane and control plane protocol terminations towards the UE, and connected via the NG interface to the 5GC.
**gNB Central Unit** (gNB-CU): a logical node hosting RRC, SDAP and PDCP protocols of the gNB or RRC and PDCP protocols of the en-gNB that controls the operation of one or more gNB-DUs. The gNB-CU terminates the F1 interface connected with the gNB-DU.
**gNB Distributed Unit** (gNB-DU): a logical node hosting RLC, MAC and PHY layers of the gNB or en-gNB, and its operation is partly controlled by gNB-CU. One gNB-DU supports one or multiple cells. One cell is supported by only one gNB-DU. The gNB-DU terminates the F1 interface connected with the gNB-CU.
**gNB-CU-Control Plane** (gNB-CU-CP): a logical node hosting the RRC and the control plane part of the PDCP protocol of the gNB-CU for an en-gNB or a gNB. The gNB-CU-CP terminates the E1 interface connected with the gNB-CU-UP and the F1-C interface connected with the gNB-DU.
**gNB-CU-User Plane** (gNB-CU-UP): a logical node hosting the user plane part of the PDCP protocol of the gNB-CU for an en-gNB, and the user plane part of the PDCP protocol and the SDAP protocol of the gNB-CU for a gNB. The gNB-CU-UP terminates the E1 interface connected with the gNB-CU-CP and the F1-U interface connected with the gNB-DU.

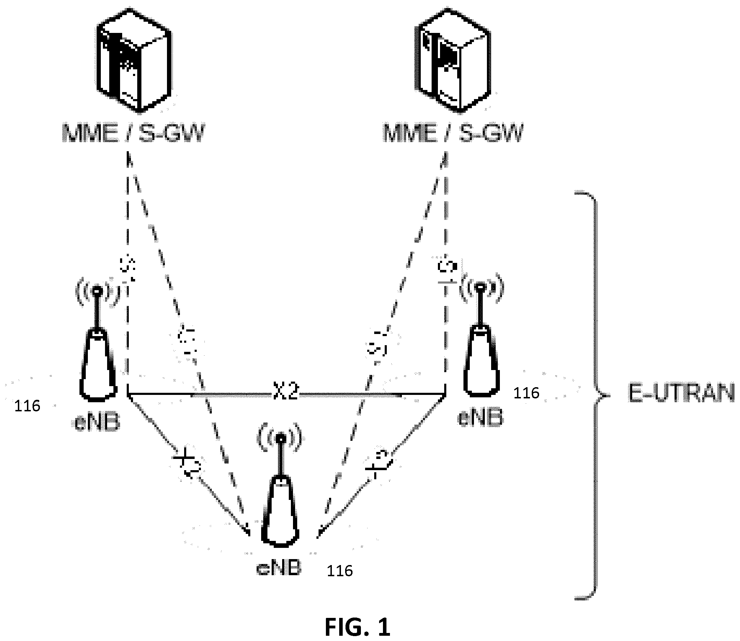

An E-UTRAN architecture is illustrated in FIG. 1. The E-UTRAN comprises of eNBs 116, providing the E-UTRA user plane (PDCP/RLC/MAC/PHY) and control plane (RRC) protocol terminations towards the UE 101. The eNBs 116 are interconnected with each other by the X2 interface. The eNBs 116 are also connected by the S1 interface to the EPC (Evolved Packet Core), more specifically to the MME (Mobility Management Entity) by means of the S1-MME interface and to the Serving Gateway (S-GW) by the S1-U interface. The S1 interface supports a many-to-many relation between MMEs / Serving Gateways and eNBs.

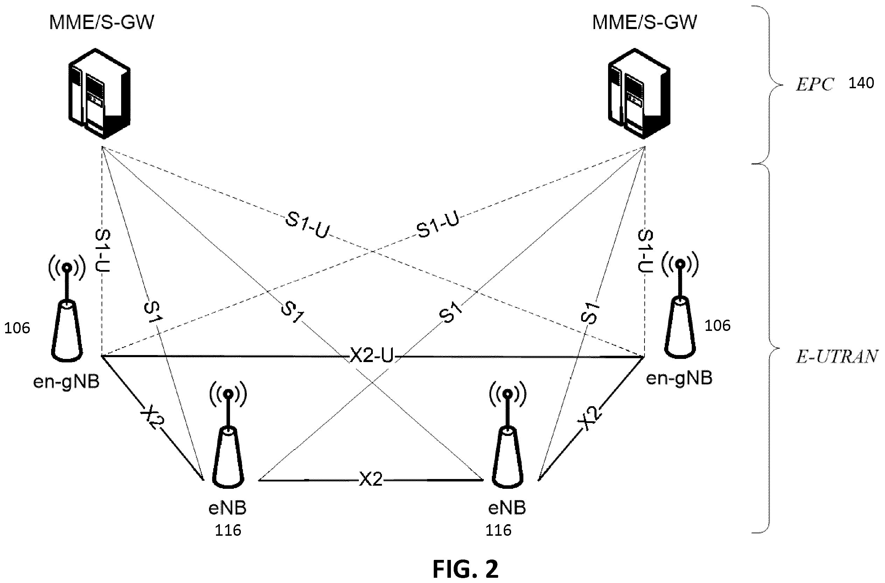

E-UTRAN also supports MR-DC via E-UTRA-NR Dual Connectivity (EN-DC), in which a UE 101 is connected to one eNB 116 that acts as a MN and one en-gNB 106 that acts as a SN. An EN-DC architecture is illustrated in FIG. 2. The eNB 116 is connected to the EPC via the S1 interface and to the en-gNB 106 via the X2 interface. The en-gNB 106 can also be connected to the EPC 140 via the S1-U interface and other en-gNBs 106 via the X2-U interface. In EN-DC, and en-gNB comprises gNB-CU 151 and gNB-DU(s) 152. In this architecture, en-gNB 106 does not have S1-C interface (with MME) and hence, it cannot operate on its own. For EN-DC operation, the en-gNB 106 connects to the MeNB 116. Without MeNB connectivity, 5G RAN operating in NSA mode is not configured to provide any service.

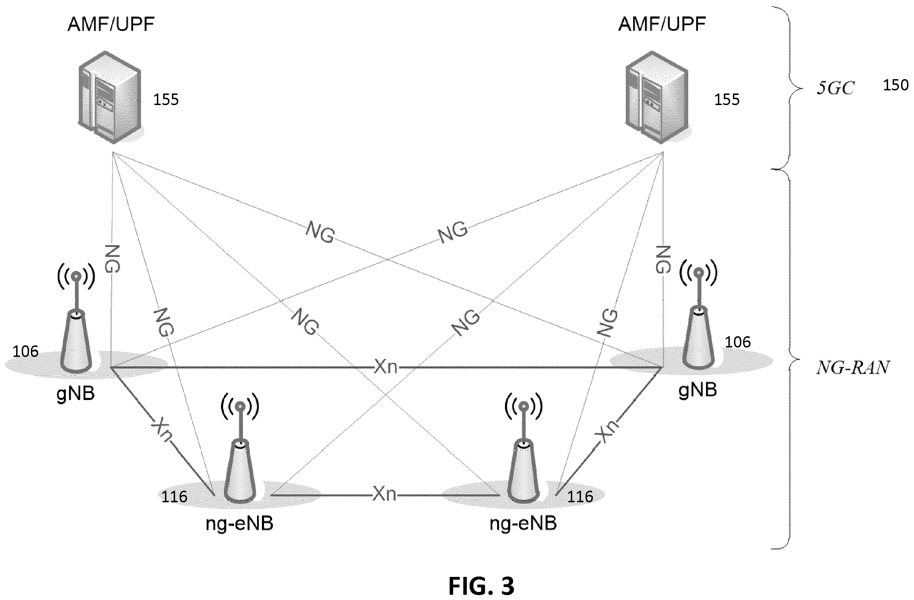

An NG-RAN architecture is illustrated in FIG. 3. An NG-RAN node is either:
a gNB, providing NR user plane and control plane protocol terminations towards the UE; or
an ng-eNB, providing E-UTRA user plane and control plane protocol terminations towards the UE. (3GPP TS 38.300 V17.0.4)

As shown in FIG 3, the gNBs 106 and ng-eNBs 116 are interconnected with each other by the Xn interface. The gNBs and ng-eNBs are also connected by the NG interfaces to the 5GC 150, more specifically to the AMF 155 (Access and Mobility Management Function) by the NG-C interface and to the UPF (User Plane Function) by the NG-U interface.

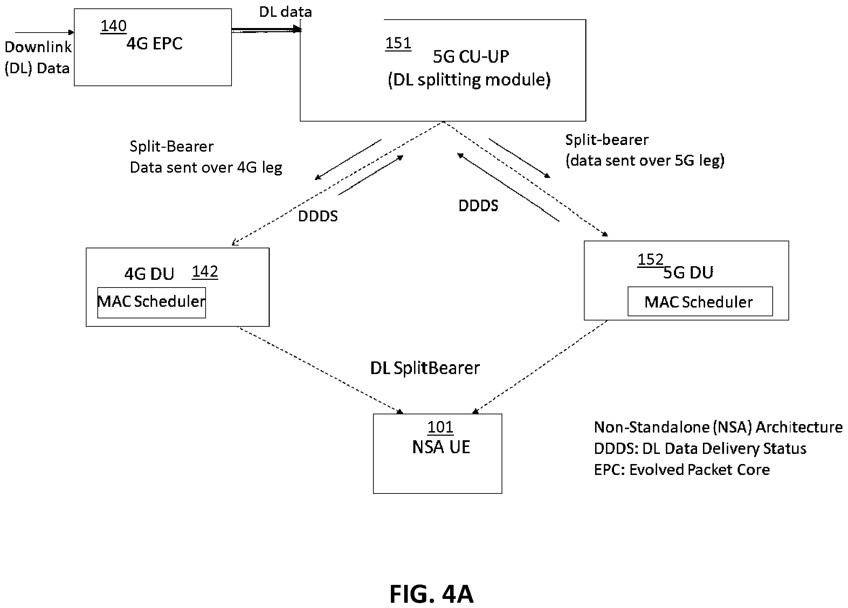

FIGS. 4A-4B show NSA/EN-DC Network Architecture with downlink data splitting. In the 5G Standalone (SA) architectures, 5G gNB 106 communicates with 5G Core 150 (and not with 4G Evolved Packet Core 140). Similarly, in the 4G architecture, 4G eNB 116 communicates with 4G Evolved Packet Core (EPC) 140 and not with 5G Core 150.

The E-UTRA-NR Dual Connectivity (EN-DC) is a dominant form of the Non-Standalone (NSA) architecture. A 4G eNB (MeNB) as well as 5G gNB (En-gNB) connect with 4G EPC and 5G core is not used in this network architecture. As shown in FIG. 4A, the DL (downlink) data goes from 4G EPC 140 to 5G CU-UP 151 where it could be split across two different transmission paths (or network legs): 1) 5G CU-UP 151to 4G DU 142 to NSA UE and 2) 5G CU-UP 151 to 5G DU 152 to NSA UE, and combined again at the NSA UE 101. Flow control between CU-UP 151 and DU as specified in the previous section is run 1) between 5G DU 152 and 5G CU-UP 151, and 2) between 4G DU 142 and 5G CU-UP 151 in this architecture. Availability of multiple transmission paths between the user plane node in RAN and UE helps to improve transmission reliability, by duplicating the same PDCP PDU on to multiple paths, or increase data rate, by scheduling different data on different paths.

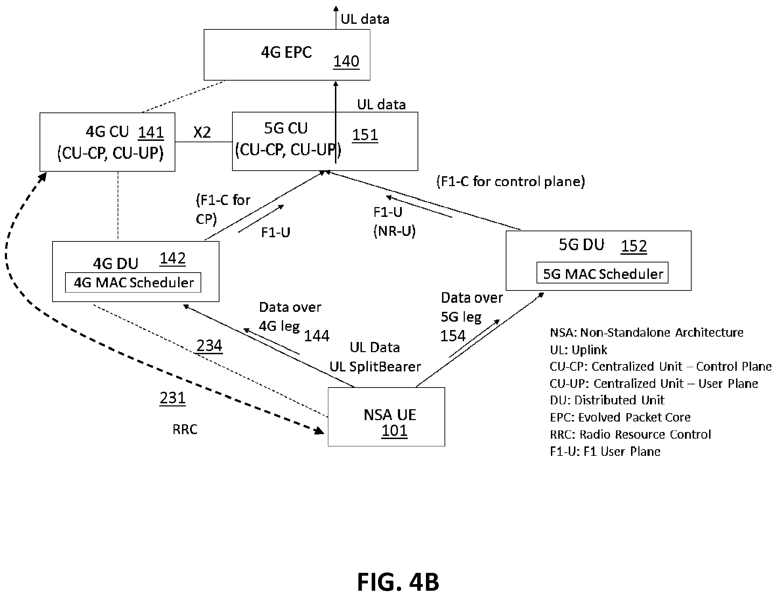

Figure 4B shows UL Split bearer in NSA Architecture. In this variant of the NSA architecture, DL data from 4G EPC 140 is first sent to 4G CU-UP 141 where it is split across two transmission paths (or network legs): 1) 4G CU-UP 141 to 4G DU 142 to NSA UE 101 and 2) 4G CU-UP 141 to 5G DU 152 to UE 101, and then combined again at the NSA UE 101. For the UL split bearer in the NSA architecture, uplink data from the UE 101 towards the 5GDU 152/4G DU 142 is split at the UE 101. After splitting, some packets are sent on the 5G leg 154 and other packets are sent on the 4G leg 144 of the network.

When a gNB 106 operates in both SA and NSA (SA+NSA) mode, the gNB comprises the following interfaces:
- Connectivity to 5GC through NG-C/NG-U interfaces (for control and user plane traffic for SA architecture)
- Connectivity to EPC through S1-U interfaces (For NSA user plane traffic)
- Connectivity to MeNB through X2-C interface (For NSA control plane traffic)

The gNB 106 operating in SA+NSA mode accepts the user either in SA mode (or) in NSA mode. In NSA mode, gNB accepts the user through SgNB addition procedure from MeNB (3GPP TS 36.423). In SA mode, gNB accepts the user through RRC setup procedure, incoming Xn/NGAP handover procedures.

An LTE system can also operate in SA or NSA or SA+NSA modes (3GPP TS 37.340). When LTE operates in NSA mode, NR gNB 106 is master and LTE eNB 116 is secondary. When LTE is changed from SA+NSA to NSA only mode, LTE SIB1 can be completed removed (or) broadcasted only for ANR purpose to avoid the Resource block wastage. As such, the same architecture can be executed eNB 116 operating in SA or NSA or SA+NSA mode, and with NG-ENB-CU and NG-ENB-DU interfaces with protocol W1AP (3GPP TS 37.473).

The gNB 106 and ng-eNB 116 host functions for Radio Resource Management such as: Radio Bearer Control, Radio Admission Control, Connection Mobility Control, Dynamic allocation of resources to UEs in both uplink and downlink (scheduling), connection setup and release; Session Management; QoS Flow management and mapping to data radio bearers; Dual Connectivity. Tight interworking between NR and E-UTRA.

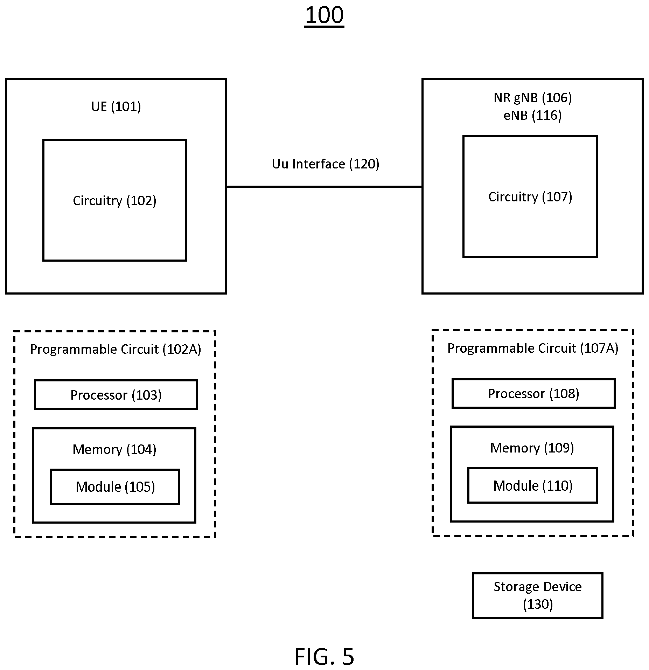

FIG. 5 is a block diagram of a RAN system 100. System 100 includes a UE 101, a BS, shown as NR gNB 106 or eNB 116. FIG. 4 is a high level architecture showing modules for a NR 5G architecture or LTE 4G architecture with eNB 116. The RAN can include one or more AN nodes or RAN nodes. These access nodes can be referred to as BS, gNBs 106, RAN nodes, eNBs 116, NodeBs, RSUs, MF-APs, TRxPs or TRPs, and so forth, and comprise ground stations (e.g., terrestrial access points) or satellite stations providing coverage within a geographic area (e.g., a cell). The term "NG RAN node" or the like refers to a RAN node that operates in an NR or 5G system (e.g., a gNB 106], and the term "E-UTRAN node" or the like refers to a RAN node that operates in an LTE or 4G system (e.g., an eNB 116). According to various embodiments, the RAN nodes can be implemented as one or more of a dedicated physical device such as a macrocell base station, and/or a low power base station for providing femtocells, picocells or other like cells having smaller coverage areas, smaller user capacity, or higher bandwidth compared to macrocells.

In some embodiments, all or parts of the RAN nodes can be implemented as one or more software entities running on server computers as part of a virtual network, which can be referred to as a CRAN and/or a vBBU. In these embodiments, the CRAN or vBBU can implement a RAN function split, such as a PDCP split where RRC and PDCP layers are operated by the CRAN/vBBU and other L2 protocol entities are operated by individual RAN nodes; a MAC/PHY split where RRC, PDCP, RLC, and MAC layers are operated by the CRAN/vBBU and the PHY layer is operated by individual RAN nodes; or a "lower PHY" split where RRC, PDCP, RLC, MAC layers and upper portions of the PHY layer are operated by the CRAN/vBBU and lower portions of the PHY layer are operated by individual RAN nodes. This virtualized framework allows the freed-up processor cores of the RAN nodes to perform other virtualized applications. In some implementations, an individual RAN node can represent individual gNB-DUs that are connected to a gNB-CU 151 via individual F1 interfaces. In these implementations, the gNB-DUs 152 can include one or more remote radio heads (RRH), and the gNB-CU 151 can be operated by a server that is located in the RAN or by a server pool in a similar manner as the CRAN/vBBU. One or more of the RAN nodes can be next generation eNBs 116 (ng-eNBs) as shown above, which are RAN nodes that provide E-UTRA user plane and control plane protocol terminations toward the UEs 101, and are connected to a 5GC via an NG interface. In MF implementations, the MF-APs are entities that provide MultiFire radio services, and can be similar to eNBs in an 3GPP architecture.

The UE 101 and NR gNB 106/eNB 116 are communicatively coupled via a Uu interface 120.

UE 101 includes electronic circuitry, namely circuitry 102, that performs operations on behalf of UE 101 to execute methods described herein. Circuity 102 can be implemented with any or all of (a) discrete electronic components, (b) firmware, and (c) a programmable circuit 102A.

NR gNB 106/eNB 116 includes electronic circuitry, namely circuitry 107, that performs operations on behalf of NR gNB 106 / eNB 116 to execute methods described herein. Circuity 107 can be implemented with any or all of (a) discrete electronic components, (b) firmware, and (c) a programmable circuit 107A.

Programmable circuit 107A, which is an implementation of circuitry 107, includes a processor 108 and a memory 109. Processor 108 is an electronic device configured of logic circuitry that responds to and executes instructions. Memory 109 is a tangible, non-transitory, computer-readable storage device encoded with a computer program. In this regard, memory 109 stores data and instructions, i.e., program code, that are readable and executable by processor 108 for controlling operations of processor 108. Memory 109 can be implemented in a random-access memory (RAM), a hard drive, a read only memory (ROM), or a combination thereof. One of the components of memory 109 is a program module, namely module 110. Module 110 includes instructions for controlling processor 108 to execute operations described herein on behalf of NR gNB 106.

The term "module" is used herein to denote a functional operation that can be embodied either as a stand-alone component or as an integrated configuration of a plurality of subordinate components. Thus, each of module 105 and 110 can be implemented as a single module or as a plurality of modules that operate in cooperation with one another.

Modules 110 are indicated as being already loaded into memories 109, and module 110 can be configured on a storage device 130 for subsequent loading into their memories 109. Storage device 130 is a tangible, non-transitory, computer-readable storage device that stores module 110 thereon. Examples of storage device 130 include (a) a compact disk, (b) a magnetic tape, (c) a read only memory, (d) an optical storage medium, (e) a hard drive, (f) a memory unit including of multiple parallel hard drives, (g) a universal serial bus (USB) flash drive, (h) a random-access memory, and (i) an electronic storage device coupled to NR gNB 106 via a data communications network.

Uu Interface 120 is the radio link between the UE 101 and NR gNB, which is compliant to the 5G NR specification, orbetween UE 101 and eNB 116 radio link that operates in an LTE, 4G system and is compliant with the 4G LTE E-UTRA specification.

UEs 101 can be dispersed throughout wireless communication network, and each UE can be stationary or mobile. A UE includes: an access terminal, a terminal, a mobile station, a subscriber unit, a station, etc. A UE can also be a cellular phone (e.g., a smart phone), a personal digital assistant (PDA), a wireless modem, a wireless communication device, a handheld device, a laptop computer, a cordless phone, a wireless local loop (WLL) station, a tablet, a camera, a gaming device, a drone, a robot/robotic device, a netbook, a smartbook, an ultrabook, a medical device, medical equipment, a healthcare device, a biometric sensor/device, a wearable device such as a smart watch, smart clothing, smart glasses, a smart wristband, and/or smart jewelry (e.g., a smart ring, a smart bracelet, and the like), an entertainment device (e.g., a music device, a video device, a satellite radio, and the like), industrial manufacturing equipment, a global positioning system (GPS) device, or any other suitable device configured to communicate via a wireless or wired medium. UEs can include UEs considered as machine-type communication (MTC) UEs or enhanced/evolved MTC (eMTC) UEs. MTC/eMTC UEs that can be implemented as loT UEs. IoT UEs include, for example, robots/robotic devices, drones, remote devices, sensors, meters, monitors, cameras, location tags, etc., that can communicate with a BS, another device (e.g., remote device), or some other entity. A wireless node can provide, for example, connectivity for or to a network (e.g., a wide area network such as Internet or a cellular network) via a wired or wireless communication link.

One or more UEs 101 in the wireless communication network (e.g., an LTE network) can be a narrowband bandwidth UE. As used herein, devices with limited communication resources, e.g. smaller bandwidth, are considered as narrowband UEs. Similarly, legacy devices, such as legacy and/or advanced UEs (e.g., in LTE) can be considered as wideband UEs. Wideband UEs are generally understood as devices that use greater amounts of bandwidth than narrowband UEs.

The UEs 101 are configured to connect, for example, communicatively couple, with an or RAN. In embodiments, the RAN can be an NG RAN or a 5G RAN, an E-UTRAN, an MF RAN, or a legacy RAN, such as a UTRAN or GERAN. The term "NG RAN" or the like refers to a RAN 110 that operates in an NR or 5G system, the term "E-UTRAN" or the like refers to a RAN that operates in an LTE or 4G system, and the term "MF RAN" or the like refers to a RAN that operates in an MF system 100. The UEs 101 utilize connections (or channels), respectively, each of which comprises a physical communications interface or layer. The connections and can comprise several different physical DL channels and several different physical UL channels. As examples, the physical DL channels include the PDSCH, PMCH, PDCCH, EPDCCH, MPDCCH, R-PDCCH, SPDCCH, PBCH, PCFICH, PHICH, NPBCH, NPDCCH, NPDSCH, and/or any other physical DL channels mentioned herein. As examples, the physical UL channels include the PRACH, PUSCH, PUCCH, SPUCCH, NPRACH, NPUSCH, and/or any other physical UL channels mentioned herein.

In some implementations, access to a wireless interface can be scheduled, where a scheduling entity (e.g.: BS, gNB, eNB etc.) allocates bandwidth resources for devices and equipment in its service area or cell. As scheduling entity can be configured to schedule, assign, reconfigure, and release resources for one or more subordinate entities. In some examples, a UE 101 (or other device) can function as master node scheduling entity, scheduling resources for one or more secondary node subordinate entities (e.g., one or more other UEs 101). Thus, in a wireless communication network with a scheduled access to time-frequency resources and having a cellular configuration, a P2P configuration, and a mesh configuration, a scheduling entity and one or more subordinate entities can communicate utilizing the scheduled resources.

As noted above, the gNB 106 and ng-eNB 116 host functions such as functions for Radio Resource Management: Radio Bearer Control, Radio Admission Control, Connection Mobility Control, Dynamic allocation of resources to UEs in both uplink and downlink (scheduling), connection setup and release; Session Management; QoS Flow management and mapping to data radio bearers; Dual Connectivity; Tight interworking between NR and E-UTRA.

### SIB1 Overview

For a gNB operating in SA mode, the gNB broadcasts SIB1 and UE uses the SIB1. SIB1 includes the following information:
- Cell Access information (like Cell Identity, PLMN Id, Tracking Area code...and the like)
- Radio resource configuration information that is common for all UEs

For the UE to access the gNB operating in SA mode, the UE has to access the SIB1 and read the radio resource common configuration. According to the information available in SIB1, the UE initiates the Random Access procedure and RRC connection procedure. Within the gNB, the DU (Distributed Unit) is configured to broadcast the SIB1 and provide the broadcasted SIB1 to CU as part of F1-C procedures (3GPP 38.473). The gNB-CU does not have any control on the SIB1 transmission. As per 3GPP 38.331 (section 5.2.1), SIB1 is configured to be broadcasted for every 20ms. Typically, SIB1 broadcast takes ~20 Resource Blocks (RB) and these RBs cannot be used for normal data transfer towards the UEs.

During the SgNB addition procedure in NSA, gNB provides the resource configuration to the UE to access the 5G cell through 4G MeNB RRC signalling. In NSA, the UE can connect to 5G SgNB without SIB1. Hence, SIB1 is optional in NSA, and need not be broadcasted by gNB operating in NSA mode. If the 5G NSA cell is configured so as to be identified by the eNB through ANR (Automatic Neighbor Relation), SIB1 can be broadcasted with very minimal information such as Cell Access Information. For instance, transmission of SIB1 with just Cell Access information for NSA mode would consume very less resource blocks (typically 1 or 2).

When gNB is operating in SA+NSA mode, SIB1 can be broadcasted by gNB-DU as SIB1 being mandatory for SA mode. If AMFs are disconnected or all AMFs are under maintenance, then gNB's SA service is down; but gNB's NSA is still in-service. The cells configured in gNB are still operational for NSA service. As the gNB is operating in NSA mode only, SIB1 is optional and can be stopped (or) at least SIB1 only for NSA ANR purpose can be transmitted. If SIB1 is stopped, ~20 Resource Blocks can be saved for every 20ms, thereby increasing the overall cell throughput. AMF disconnection is known only to gNB-CU and as per the current F1AP specification (3GPP 38.473), gNB-CU cannot request gNB-DU to remove the SIB1 during the AMF1 disconnection scenario. So SIB1 is continued to be broadcasted even in NSA mode and this leads to resource block (RB) wastage. With low bandwidth 5G cells, the overall RB wastage would be higher. It will be noted that when AMF(s) is/are disconnected, gNB-CU cannot deactivate the cell towards the gNB-DU (in F1-C interface as cell deactivation will make the cell as out-of-service for both SA and NSA).

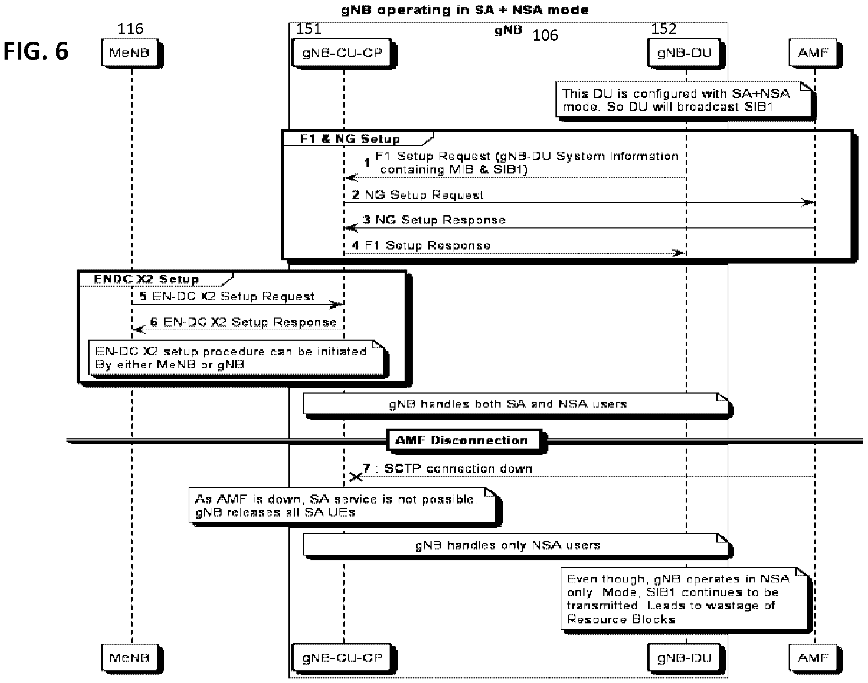

FIG. 6 shows a gNB operating in SA + NSA mode. As shown in block 1, over "gNB-DU" this DU is configured with SA+NSA mode. As such, the DU will broadcast a complete SIB1.

Blocks 1 to 4 cover the NG setup and F1 setup procedure. At block 1, gNB-CU-CP initiates the NG setup procedure on receiving the F1 setup procedure from the first DU. NG setup procedure is for SA mode and F1 setup procedure is common for NSA and SA modes. At block 2, the gNB-CU-CP sends the AMF an NG Setup Request. At block 3, the AMF sends the gNB-CU-CP a NG Setup Response. Then, at block 4, the gNB-CU-CP sends the gNB-DU the F1 Setup Response.

Blocks 5 and 6 cover the EN-DC X2 setup procedure between the MeNB and gNB. As shown in FIG. 5, at block 5 the MeNB initiates the EN-DC X2 setup request. At block 6, the gNB-CU-CP sends the MeNB the EN-DC X2 Setup Response Now, the gNB is configured for and capable of handling both SA and NSA users.

In block 7, the connection between the AMF and CU-CP is down. So, SA service is not possible. The gNB releases all SA UEs and the gNB operates in NSA only mode.

The DU continues to broadcast the SIB1 even though it is not required. This results in a wastage of ~ 20 Resource Blocks for every 20ms. As shown above, over "gNB-CU-CP", as AMF is down, SA service is not possible. This releases all SA UEs. "gNB-CU-CP", "gNB-DU", gNB handles only NSA users. Even though, gNB operates in NSA only Mode, SIB1 continues to be transmitted. This leads to the wastage of Resource Blocks.

As of the present disclosure, no solution exists as per the 3GPP 38.473 specification. SIB1 is continued to be broadcasted during the switching from SA+NSA to NSA mode.

In an implementation, the following IE (sibloptimization) is added to the gNB-CU Configuration Update message in F1-C interface (3GPP 38.473).

**Table 1**

| **IE/Group Name** | | | **Presence** | **Range** | **IE type and reference** | **Semantics description** | **Criticalit y** | **Assigne d Criticali ty** |
|---|---|---|---|---|---|---|---|---|
| **Cells to be Modified List** | | | | *0..1* | | List of cells to be activated or modified | YES | reject |
| | **>Cells to be Modified List Item** | | | 1.. *<maxCelli ngNBDU>* | | | EACH | reject |
| | | >>NR CGI | M | | 9.3.1.12 | | - | |
| | | >> siblOpti mization | | | ENUMERATED (completeSIB1, AnrSIB1, NoSIB1) | completeSIB1 means, complete SIB1 for the SA operation (CellAcceslnfo + Common Radio Resource). AnrSIB1 means, only cellAccessInfo to be broadcasted in SIB1. NoSIB1 means, SIB1 shouldn't be broadcasted by DU | | |

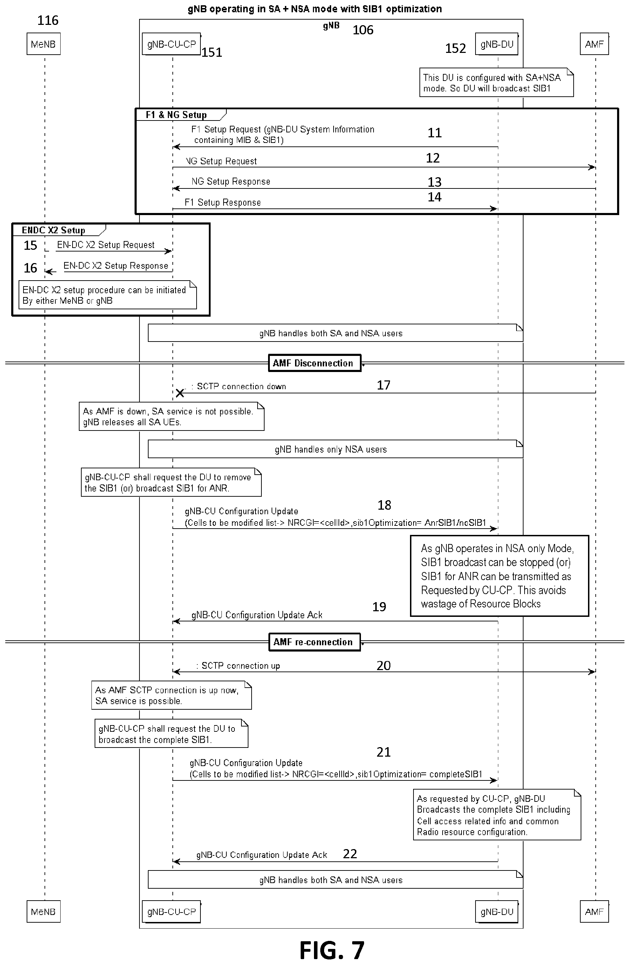

In an implementation, FIG. 7 shows an updated call flow along with SIB1 optimization. As shown in FIG. 6, the DU is configured with SA+NSA mode. The DU is configured to broadcast a complete SIB1.

In FIG. 7, blocks 11 to 14 show a system flow for an NG setup and F1 setup procedure. The gNB-CU-CP initiates an NG setup procedure on receiving the F1 setup procedure from the first DU. The NG setup procedure is for SA mode and F1 setup procedure is common for NSA and SA mode. This DU is configured with and SA+NSA mode. The DU is configured to broadcast SIB1.

For the F1 and NG Setup, at block 11, the gNB-DU sends the gNB-CU-CP an F1 Setup Request (gNB-DU System Information including MIB & SIB1). At block 12, the gNB-CU-CP sends the AMF an NG Setup Request. At block 13, the AMF sends the gNB-CU-CP a NG Setup Response. Then at block 14, the gNB-CU-CP sends the gNB-DU the F1 Setup Response.

Blocks 15 and 16 show the EN-DC X2 setup procedure between the MeNB and gNB. An EN-DC X2 setup request can be initiated by either MeNB or gNB. As shown in FIG. 6, at block 15 the MeNB initiates the EN-DC X2 setup request. At block 16, the gNB-CU-CP sends the MeNB the EN-DC X2 Setup Response Now, the gNB is configured for and capable of handling both SA and NSA users.

Block 17 shows an implementation where the SCTP connection between the AMF and CU-CP is down, and as a result, SA service is not possible. The gNB releases all SA UEs. The gNB operates in NSA only mode and handles only NSA users.

The gNB-CU-CP is configured to request the DU to remove the SIB1 or broadcast SIB1 for the ANR.

At block 18, as SIB1 can be removed or "AnrSIB1" can be transmitted for NSA operation, the CU-CP sends the gNB-CU Configuration Update with (Cells to be modified list-> NRCGI=<cellId>,sib1Optimization= AnrSIB1/noSIB1). In this, "AnrSIB1" represents that minimal SIB1 (only Cell Access info) can be broadcasted for ANR. Similarly, "noSIB1" means the DU does not transmit the SIB1 at all. The CU-CP can decide the value between AnrSIB1 and noSIB1 based on whether it is for ANR in NSA mode. If ANR is needed in NSA mode, CU-CP is configured to use the value AnrSIB1. If not, the CU-CP can use noSIB1. As such, SIB1 broadcast can be stopped (or) SIB1 for ANR can be transmitted as requested by CU-CP. This advantageously avoids wastage of RBs.

At block 19, gNB-DU acknowledges with a gNB-CU Configuration Update acknowledgment (gNB-CU Configuration Update Ack).

At block 20, once the AMF SCTP connection is up, SA service is possible. The complete SIB1 can be broadcasted by gNB-DU. At block 21, the gNB-CU-CP requests the DU to transmit the complete SIB1 by sending the message gNB-CU Configuration Update with (Cells to be modified list-> NRCGI=<cellId>,sib1Optimization= completeSIB1). As requested by CU-CP, gNB-DU broadcasts the complete SIB1, including Cell access related info and common Radio resource configuration.

At block 22, gNB-DU acknowledges with gNB-CU Configuration Update ack. Now, the gNB is capable of handling both SA and NSA users.

With the above procedure, between steps 19 and 20 (when gNB operating in NSA only mode), SIB1 broadcast is completely avoided with noSIB1 option (or) a minimal SIB1 broadcast is performed with AnrSIB1 option. This avoids the wastage of resource blocks.

Implementations provide advantageous solutions for the same problem for LTE (4G) architecture as well. An LTE system can also operate in SA or NSA or SA+NSA modes (3GPP TS 37.340). When LTE operates in NSA mode, NR gNB 106 is master and LTE eNB 116 is secondary. When LTE is changed from SA+NSA to NSA only mode, LTE SIB1 can be completed removed (or) broadcasted only for ANR purpose to avoid the Resource block wastage. As such, the same changes described above can be performed with the eNB 116 operating in SA or NSA or SA+NSA mode, and with NG-ENB-CU and NG-ENB-DU interfaces with protocol W1AP (3GPP TS 37.473).

In another implementation, the system can be configured for the gNB operating mode to operate as SA+NSA, SAonly, or NSAonly in gNB-CU-CP. If the operating mode is SAonly or SA+NSA, gNB-CU-CP can inform the DU to broadcast a complete SIB1. If the operating mode is NSAonly, gNB-CU-CP can inform DU to broadcast minimal SIB1 (AnrSIB1) or NoSIB1. If operator wants to change the operating mode of the cell from SAonly or SA+NSA to NSAonly, gNB-CU-CP can inform DU to broadcast minimal SIB1 (AnrSIB1) or NoSIB1, thereby using a lower number of RB resources.

Similarly, the system can be configured for the eNB operating mode to operate as SA+NSA, SAonly, or NSAonly in eNB-CU-CP. If the operating mode is SAonly or SA+NSA, eNB-CU-CP can inform the DU to broadcast a complete SIB1. If the operating mode is NSAonly, eNB-CU-CP can inform DU to broadcast minimal SIB1 (AnrSIB1) or NoSIB1. If operator wants to change the operating mode of the cell from SAonly or SA+NSA to NSAonly, eNB-CU-CP can inform DU to broadcast minimal SIB1 (AnrSIB1) or NoSIB1, thereby using a lower number of RB resources.

It will be understood that implementations and embodiments can be implemented by computer program instructions. These program instructions can be provided to a processor to produce a machine, such that the instructions, which execute on the processor, create means for implementing the actions specified herein. The computer program instructions can be executed by a processor to cause a series of operational steps to be performed by the processor to produce a computer-implemented process so that the instructions, which execute on the processor, provide steps for implementing the actions specified. Moreover, some of the steps can also be performed across more than one processor, such as in a multi-processor computer system or even a group of multiple computer systems. In addition, one or more blocks or combinations of blocks in the flowchart illustration can also be performed concurrently with other blocks or combinations of blocks, or even in a different sequence than illustrated without departing from the scope or spirit of the invention.

Accordingly, blocks of the flowchart illustration support combinations for performing the specified actions, combinations of steps for performing the specified actions and program instruction means for performing the specified actions. The foregoing examples should not be construed as limiting and/or exhaustive, but rather, an illustrative use case to show an implementation of at least one of the various embodiments.

## Claims

1. A method for a radio access network (RAN) base station (BS) comprising:
establishing an S1 connection between a base station and a network gateway, the network gateway being for a 4G Evolved Packet Core (EPC) (140) network or a 5G New Radio (NR) network (150);
establishing an F1 setup including a System Information Block 1 (SIB1) between a Centralized Unit (CU) and a Distributed Unit (DU) of the base station;
establishing an X2 setup between a Master Node and the base station, the base station being configured to handle both a Stand Alone (SA) and a Non-Stand Alone (NSA) users; and
at a disconnection of the network gateway, sending, by a CU Control Plane (CU-CP) of the base station, a request to the DU of the base station to
remove the SIB1, or
to broadcast a minimal transmission of the SIB1.

2. The method of claim 1, wherein the base station is a gNodeB (gNB) (106) and the network gateway is an Access and Mobility Function (AMF) (155) for the 5G New Radio (NR) network (150), the method comprising:
establishing an Next Generation (NG) setup between the gNB (106) and the AMF (155);
establishing the F1 setup between a gNB-CU (151) and a gNB-DU (152) including the SIB1;
establishing an Evolved Universal Mobile Telecommunications System Terrestrial Radio Access Network (EUTRAN) New Radio (E-UTRA-NR) Dual Connectivity (EN-DC) X2 setup between a Master eNB (MeNB) and the gNB; and
at a disconnection of the AMF (155), sending, by a gNB-CU (151)-Control Plane (gNB CU-CP) of the gNB (151), the request to the gNB-DU to remove the SIB1 or the request to broadcast the minimal transmission of the SIB1 for an Automatic Neighbor Relation (ANR).

3. The method of claims 1 or 2, further comprising:
when a Stream Control Transmission Protocol (SCTP) connection between the AMF (155) and gNB CU-CP is down, releasing, by the gNB, all SA User Equipment (UEs), wherein the gNB (106) operates in an NSA only mode and handles only NSA users; and
removing the SIB1 or transmitting minimal SIB1 for NSA operation in response to the request remove the SIB1 or broadcast the minimal transmission of the SIB1 for the ANR.

4. The method of claims 2 or 3, further comprising:
sending, by the gNB CU-CP, a gNB-CU (151) Configuration Update including an ANR SIB1 value (AnrSIB1) for the minimal transmission of the SIB1 that can be broadcasted for ANR or a No SIB1 value (noSIB) that the DU does not transmit the SIB1.

5. The method of claim 4, further comprising:
deciding, by the gNB CU-CP between the ANR SIB1 value and the No SIB1 value based on whether the gNB-CU (151) Configuration Update is for the ANR in NSA mode, where if the ANR is needed in an NSA mode, the gNB CU-CP is configured to use the ANR SIB1 value, and if not, the ANR is configured to use the No SIB1 value.

6. The method of any of claims 2-5, further comprising:
stopping the SIB1 broadcast for the ANR as requested by the CU-CP.

7. The method of any of claims 2-6, further comprising:
acknowledging, by the gNB-DU (152), the gNB-CU (151) Configuration Update.

8. The method of any of claims 2-7, further comprising:
once the AMF SCTP connection is back up, broadcasting, by the gNB DU (152), a complete SIB1.

9. The method of any of claims 2-8, further comprising:
requesting, by the gNB-CU-CP, the gNB DU (152) to transmit the complete SIB1 by sending the gNB-CU (151) Configuration Update with a complete SIB1 value.

10. The method of claims 2-9, further comprising:
acknowledging, by the gNB-DU, a gNB-CU (151) Configuration Update, whereby the gNB (106) can resume handling both SA and NSA users.

11. The method of claim 1, wherein the base station is an eNodeB (eNB) (116) and the network gateway is a Mobility Management Entity/Serving Gateway (MME/S-GW) for the 4G EPC network, the method comprising:
establishing an S1 setup between the eNB (116) and the MME/S-GW;
establishing an W1 setup between an eNB-CU (141) and an eNB-DU (142) including the SIB1;
establishing the EN-DC X2 setup between the SeNB and the MgNB; and
at a disconnection of the MME/S-GW, sending, by an eNB-CU-CP of the eNB (116), the request to the eNB-DU (142) to remove the SIB1 or the request to broadcast the minimal transmission of the SIB1.

12. The method of any of claims 2-10, wherein the base station is a gNB (106) and the network gateway is an Access and Mobility Function (AMF) (155)for the 5G NR network, the method comprising:
configuring a gNB (106) operating mode to operate as SA+NSA, SAonly, or NSAonly in a gNB-CU-CP, so that when the operating mode is SAonly or SA+NSA, the gNB-CU-CP is configured to inform the DU to broadcast a complete SIB1;
when the operating mode is NSAonly, gNB-CU-CP is configured to inform the DU to broadcast the minimal SIB1 (AnrSIB1) or no SIB1 (NoSIB1); and
when the operating mode of the cell is changed from SAonly or SA+NSA to NSAonly, the gNB-CU-CP configured to inform DU to broadcast the minimal SIB1 (AnrSIB1) or no SIB1 (NoSIB1).

13. The method of claim 11, wherein the base station is an eNB (116) and the network gateway is an MME/S-GW for the 4G EPC network, the method comprising:
configuring an eNB (116) operating mode to operate as SA+NSA, SAonly, or NSAonly in an eNB-CU-CP, so that when the operating mode is SAonly or SA+NSA, the eNB-CU-CP is configured to inform the DU to broadcast a complete SIB1;
when the operating mode is NSAonly, eNB-CU-CP is configured to inform the DU to broadcast the minimal SIB1 (AnrSIB1) or no SIB1 (NoSIB1); and
when the operating mode of the cell is changed from SAonly or SA+NSA to NSAonly, the eNB-CU-CP configured to inform DU to broadcast the minimal SIB1 (AnrSIB1) or no SIB1 (NoSIB1).
